# EUROPEAN PATENT APPLICATION

(11) **EP 4 560 895 A1**
(43) Date of publication of application: **28.05.2025**
(21) Application number: 23919208.1
(22) Date of filing: 28.04.2023
(51) Int. Cl.: H02K 7/06, H02K 7/10, H02K 5/24

(54) **SPEED-REDUCING ELECTRIC MOTOR MODULE, SPEED REDUCING METHOD FOR ELECTRIC MOTOR MODULE AND PHYSICAL ASSISTANCE DEVICE**

(30) Priority: 31.01.2023 CN 202310093322
(71) Applicant: Hypershell Co., Ltd., Shanghai 200120 (CN)
(72) Inventor: SUN, Kuan, Shanghai 200120 (CN)
(74) Representative: Canzler & Bergmeier Patentanwälte Partnerschaft mbB
(86) International application number: PCT/CN2023/091414
(87) International publication number: WO 2024/159640

(57) **Abstract**

Disclosed in the present invention is an efficient and rapid speed-reducing electric motor module, comprising a driving end and a rotary output shaft, wherein the driving end comprises a lead screw and a lead screw nut, one end of the lead screw being provided with a matched lead screw, which can be connected to a power interface of a prime mover for driving the lead screw to rotate; when the lead screw drives the lead screw nut to move linearly, the lead screw nut rotates about the lead screw under the guidance of a guide rail; and the lead screw nut drives the rotary output shaft to rotate during the rotation process thereof. Compared with an existing speed reducer using a method in which motion and power are transmitted by means of a transmission ratio between large and small gears or controllable elastic deformation of flexible elements, the present invention provides a new speed reducer and a new speed reducing method, in which the rotation motion outputted by a rotor end of an electric motor is converted into linear motion and then the linear motion is converted into the rotation motion, such that the rotation speed is reduced, and the output torque is thus improved.

## Description

### TECHNICAL FIELD

The invention belongs to the field of walking assistance of human exoskeleton, and particularly relates to a speed-reducing electric motor module.

### BACKGROUND

The speed reducer is a relatively precise machine which plays a role in matching the rotating speed and transmitting the torque between a prime mover and a working machine or an actuating mechanism. The purpose of using it is to reduce the rotational speed and increase the torque.

The existing speed reducer has various types, including a harmonic speed reducing motor, an RV speed reducer and a planetary speed reducer.

The harmonic speed reducer utilizes controllable elastic deformation of the flexible element to transmit motion and power, and has the defects that the flexible gear has a short service life under the action of alternating load and the speed reducer has poor heat dissipation conditions;

Compared with a harmonic reducer, the RV reducer has longer service life and higher precision, but has the defects of large mass and volume and is not suitable for a wearable exoskeleton robot.

Compared with the prior two, the planetary reducer can achieve smaller volume and higher service life and precision, but has the defects of complex structure, heavy weight, limited bearable torque, high production precision requirement, high cost and difficult assembly.

The speed reducing mechanisms adopt the transmission ratio between a big gear and a small gear or utilize controllable elastic deformation of a flexible element to transmit motion and power. Especially, as the precision reducer of industrial robot core spare part, compare with general reduction gear, need possess higher life-span and precision to and lower production and installation degree of difficulty. However, the existing speed reducer has high requirements on installation accuracy, has higher requirements on installation personnel and has certain installation and production difficulty.

The speed reducer used by the existing human exoskeleton cannot control the driving stroke of a prime motor, and cannot set a fixed stroke when the power of the prime motor is out of control. When the device is suitable for the human exoskeleton, once a prime motor is out of control, the human exoskeleton cannot effectively limit the stroke and cannot fix the driving stroke of the motor, and once the prime motor is out of control, the human exoskeleton may be irreversibly pulled.

### SUMMARY

The technical problems to be solved by the invention are as follows: the invention aims to solve the defects in the prior art and provides a speed reducing motor module which is simple to assemble, controllable in stroke and convenient to install and a speed reducing motor method.

The invention also provides a physical assistance device which is simple in structure, controllable in stroke and convenient to install.

The technical scheme of the invention is as follows: the invention provides a high-efficiency and rapid speed-reducing motor module, which comprises a driving end and a rotary output shaft, wherein the driving end is connected with the rotary output shaft;
The driving end comprises a screw rod and a screw rod nut; one end of the screw rod is provided with a power interface which is matched with the screw rod and can be connected with a prime mover to drive the screw rod to rotate;
When the screw rod drives the screw rod nut to do linear motion, the screw rod nut rotates around the screw rod under the guidance of the guide rail;
And in the rotary motion process of the screw rod nut, the rotary output shaft is driven to do rotary motion.

Further, the guide rail is tubular; the axis of the guide rail is coincident with the axis of the screw shaft;
The guide rail guides the motion track of the feed screw nut to be a cylindrical spiral line wound around the pipe wall of the guide rail.

Further, the guide rail is tubular, and a spiral rail groove penetrating through the pipe wall on one side of the guide rail is formed in the pipe wall of the guide rail;
The track of the spiral track groove is a cylindrical spiral line wound around the pipe wall of the guide rail;
A tubular hollow rotary output shaft is arranged in the pipe wall of the guide rail;
A linear track groove penetrating through the pipe wall on one side of the rotary output shaft is formed in the pipe wall of the rotary output shaft; the notch track of the linear track groove is parallel to the axial direction of the rotary output shaft;
And a screw rod nut are arranged in the pipe wall of the rotary output shaft along the axial direction of the rotary output shaft, and the screw rod nut is arranged on the screw rod and can reciprocate along the screw rod.

Further, the screw nut comprises a nut body moving along the screw, and a first bearing and a second bearing which are arranged on the nut body;
The first bearing passes through the linear track groove, contacts the spiral track groove and can roll in the spiral track groove; the nut body is driven to do linear motion and simultaneously do rotary motion along the track of the spiral track groove;
The second bearing contacts the linear track groove and can roll in the linear track groove; and under the drive of the nut body, the rotary output shaft is driven to do rotary motion in the process of moving along the linear track groove.

Further, the first bearing comprises a first rotating shaft fixed on the feed screw nut and a first roller arranged on the first rotating shaft;
The first rotating shaft passes through the linear track groove and reaches the spiral track groove; the first roller only moves in the spiral track groove;
The second bearing comprises a second rotating shaft fixed on the feed screw nut and a second roller arranged on the second rotating shaft; the second roller moves only in the linear track groove.

Further, the diameter of the first roller is smaller than the width of the spiral track groove by 0.01-0.2 mm;
The diameter of the second roller is smaller than the groove width of the linear track groove by 0.01-0.2 mm.

Furthermore, a motor connecting section is arranged on one side of the guide rail.

The invention also discloses a motor deceleration method, which comprises the steps of converting the rotary motion output by the rotor end of the motor into linear motion and converting the linear motion into rotary motion, so that the rotating speed is reduced, and the output torque is improved.

Further, the rotating torque output by the rotor end of the motor is transmitted to the screw rod to drive the screw rod to rotate; a screw rod nut arranged on the screw rod is driven to linearly move through a rotating screw rod;
When the screw rod drives the screw rod nut to do linear motion, the screw rod nut rotates around the screw rod under the guidance of the guide rail;
In the process of the rotary motion of the screw rod nut, the rotary output shaft is driven to do rotary motion;
The guide rail guides the motion track of the feed screw nut to be a cylindrical spiral line wound around the pipe wall of the guide rail.

The invention also discloses a physical assistance device, which comprises a driving mechanism and a mechanical framework driven by the driving mechanism; the driving mechanism realizes speed reduction through any one of the speed reducing motor modules and outputs power for the mechanical framework.

### BENEFICIAL EFFECTS

Compared with the prior art, the invention has the beneficial effects that:
1. Compared with the existing speed reducer, the speed reducer and the speed reduction method adopt a method of transmitting motion and power by adopting the transmission ratio between large and small gears or by utilizing controllable elastic deformation of a flexible element.
2. The guide rail and the rotary output shaft are respectively provided with a spiral track groove and a linear track groove, and the first bearing and the second bearing on the screw rod nut respectively move in the spiral track groove and the linear track groove, so that the driving stroke of a prime motor can be directly limited; through the structural limitation of the invention, namely the maximum rotation angle of the rotating output shaft relative to the guide rail is fixed on the structural layer of the device and can not be changed only through the output torque of the prime mover, namely the rotation angle of the rotating output shaft is limited by the spiral track groove of the guide rail through the first bearing, the out-of-control condition can not be generated, and the reliability is higher; therefore, the condition that the rotor rotates uncontrollably to cause injury of limbs of a person when the control system fails is prevented to a certain extent;
3. Compared with gear transmission, the contact area between the transmission parts is larger, namely the contact area between the bearing and the track groove is larger than that of the gear in matching, so that the noise is lower during working, and compared with the conventional speed reducer, the speed reducer can bear larger torque and has stronger and more stable performance under the condition of certain quality.
4. The invention has simple structure, and in the installation process, the matching relation of the existing gear set does not need to be considered, and the first bearing and the second bearing only need to be respectively corresponding to the corresponding track grooves; therefore, compared with the prior art, the invention has better modular design, and different transmission ratios can be obtained only by replacing the stator shells with different lead angles of the spiral guide track grooves.
5. The invention does not need a gear set, reduces the radial size of the reducing motor, and leads the reducing motor to be lighter than the traditional reducing motor in the use scene of the exoskeleton of the single driving motor.

### BRIEF DESCRIPTION OF DRAWINGS

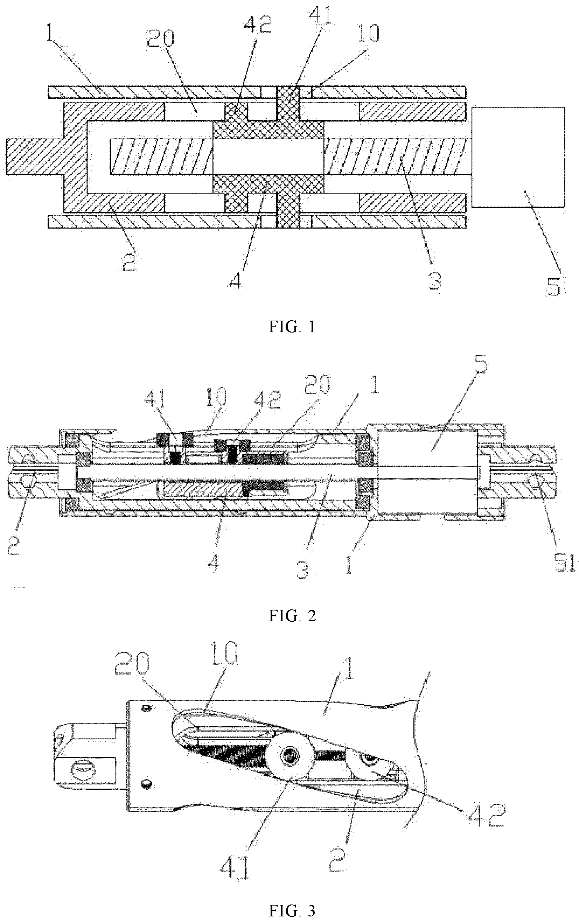

FIG. 1 is a schematic diagram of the present invention;
FIG. 2 is a schematic diagram of a specific structure of the present invention;
FIG. 3 is a schematic view of the structure of the guide rail and the spiral track groove of the present invention;

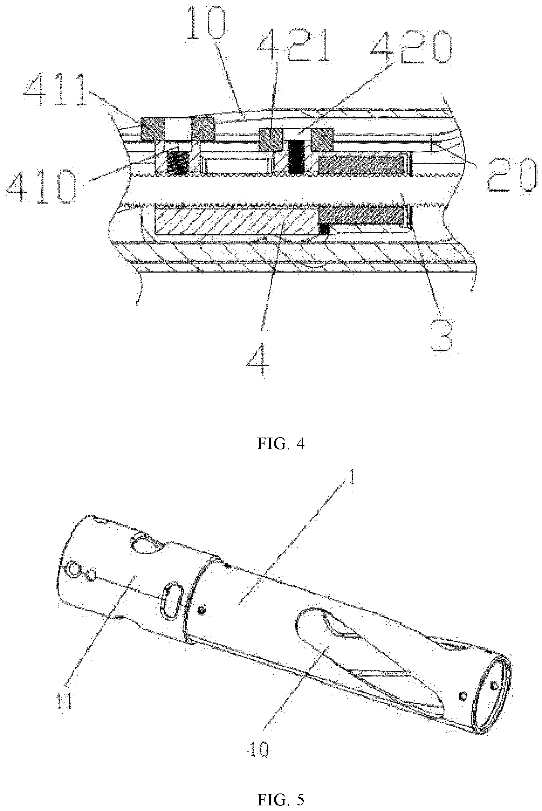

FIG. 4 is a schematic structural diagram of the feed screw nut, the first bearing and the second bearing according to the present invention;
FIG. 5 is a schematic view showing a detailed structure of a guide rail according to the present invention;

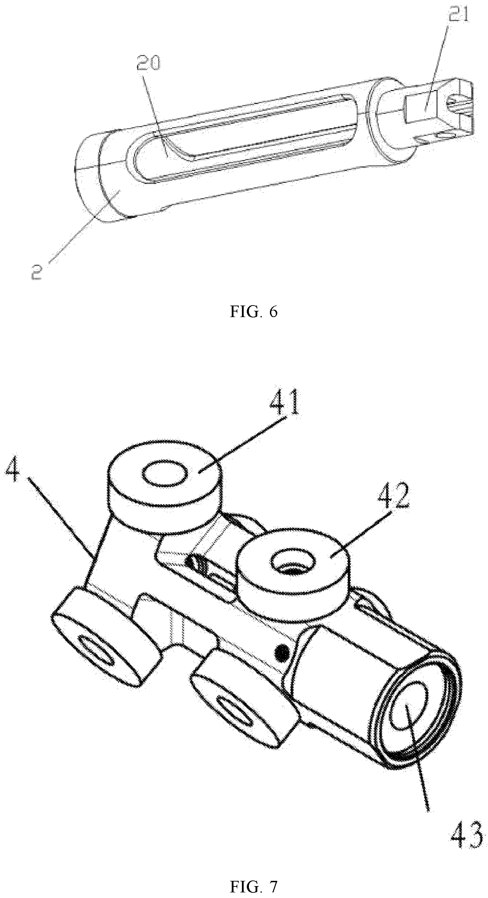

FIG. 6 is a schematic view of a rotary output shaft according to the present invention;
Fig. 7 is a schematic view showing a specific structure of the feed screw nut of the present invention.

### DETAIL DESCRIPTION OF EMBODIMENTS

For the understanding of the present invention, the following examples are given for the purpose of further illustrating the present invention and are not to be construed as limiting the scope of the present invention.
A speed-reducing electric motor module comprises a driving end and a rotary output shaft 2;
The driving end comprises a screw rod 3 and a screw rod nut 4; one end of the screw rod 3 is provided with a power interface 30 which is matched with the screw rod 3 and can be connected with a prime mover 5 to drive the screw rod 3 to rotate;
When the screw rod 3 drives the screw rod nut 4 to do linear motion, the screw rod nut 4 rotates around the screw rod 3 under the guidance of the guide rail 1; the guide rail 1 is tubular, and a spiral rail groove 10 penetrating through the pipe wall on one side of the guide rail 1 is arranged on the pipe wall of the guide rail 1; one side of the guide rail 1 is provided with a motor connecting section for connecting a prime mover 5.

The track of the spiral track groove 10 is a cylindrical spiral line wound around the pipe wall of the guide rail 1;
A tubular hollow rotary output shaft 2 is arranged in the pipe wall of the guide rail 1;
A linear track groove 20 penetrating through the pipe wall on one side of the rotary output shaft 2 is formed in the pipe wall of the rotary output shaft 2; the notch track of the linear track groove 20 is parallel to the axial direction of the rotating output shaft 2;
In the pipe wall of the rotary output shaft 2, a screw rod 3 and a screw rod nut 4 which is arranged on the screw rod 3 and can reciprocate along the screw rod are arranged along the axial direction of the rotary output shaft 2.

And in the rotary motion process of the screw rod nut 4, the rotary output shaft 2 is driven to do rotary motion.
Wherein the feed screw nut 4 comprises a nut body 40 moving along the feed screw and a first bearing 41 and a second bearing 42 arranged on the nut body; the first bearing 41 comprises a first rotating shaft 410 fixed on the feed screw nut 4 and a first roller 411 arranged on the first rotating shaft 410;
The first rotating shaft 43 passes through the linear track groove 20, reaches the spiral track groove 10, and can roll in the spiral track groove 10; the first roller 411 is smoothly rotated only in the spiral track groove 10 without a significant gap. Preferably, the diameter of the first roller 411 is smaller than the groove width of the spiral track groove 10 by 0.01-0.2 mm; the nut body 40 is driven by the friction force generated by the first rotating shaft 43 and the spiral track groove 10, and rotates along the track of the spiral track groove 10 while moving linearly;
The second bearing 42 comprises a second rotating shaft 420 fixed on the feed screw nut 4 and a second roller 421 arranged on the second rotating shaft 420; the second roller 421 is smoothly rotated only in the linear rail groove 20 without a significant gap. Preferably, the diameter of the second roller 421 is smaller than the groove width of the linear rail groove 20 by 0.01-0.2 mm.

The second bearing 42 contacts the linear track groove 20 and can roll in the linear track groove 20; the nut body 40 drives the rotary output shaft 2 to rotate in the process of moving along the linear track groove 20.

The transmission ratio is related to the lead of the guide rail and the lead screw lead, and the formula is i = guide rail lead/lead screw lead; in the formula, the lead of the guide rail is the lead of a cylindrical spiral line on the outer cylindrical surface of the guide rail; the lead of the screw rod is the distance of the screw rod nut moving on the screw rod when the screw rod rotates for one circle.

In operation, the power interface 30 is connected to the prime mover 5; under the drive of a prime motor 5, a screw rod 3 drives a screw rod nut 4 to move linearly; the first bearing 41 arranged on the feed screw nut 4 rolls in the spiral track groove 10 under the drive of the linear motion of the feed screw nut 4, and drives the feed screw nut 4 to rotate along the track direction of the spiral track groove 10 on the pipe wall of the guide rail 1;
The feed screw nut 4 is also provided with a second bearing 42 positioned in the linear track groove 20; under the rotation of the feed screw nut 4 body, the second bearing 42 rolls in the linear track groove 20 and drives the rotary output shaft 2 to rotate along with the nut body 40; the output end 21 of the rotary output shaft 2 is driven to rotate by the rotation of the rotary output shaft 2, and the torque of the prime motor is output.

In the application, a plurality of spiral track grooves 10 are uniformly arranged at equal intervals along the circumferential direction of a guide rail 1; a plurality of linear track grooves 20 are uniformly arranged along the circumferential direction of the rotary output shaft 2 at equal intervals; the feed screw nut 4 is provided with a first bearing 41 and a second bearing 42 which are matched with the spiral track groove 10 and the linear track groove 20.

Preferably, three spiral track grooves 10 and three linear track grooves 20 are provided.

The invention discloses a motor speed reduction method, which is characterized in that the rotary motion output by a rotor end of a motor is converted into linear motion, and then the linear motion is converted into rotary motion, so that the rotating speed is reduced, and the output torque is improved.
The rotary torque output by the rotor end of the motor is transmitted to the screw rod to drive the screw rod to rotate; the rotary screw rod drives a screw rod nut arranged on the screw rod to move linearly;
When the screw rod drives the screw rod nut to do linear motion, the screw rod nut rotates around the screw rod under the guidance of the guide rail;
In the process of the rotary motion of the screw rod nut, the rotary output shaft is driven to do rotary motion;
The guide rail guides the motion track of the feed screw nut to be a cylindrical spiral line around the pipe wall of the guide rail.

The present invention is different from available speed reducer and adopts the transmission ratio between large and small gears or the controllable elastic deformation of flexible element to transmit motion and power.

The guide rail and the rotary output shaft are respectively provided with a spiral track groove and a linear track groove, and the first bearing and the second bearing on the screw rod nut respectively move in the spiral track groove and the linear track groove, so that the driving stroke of a prime motor can be directly limited; the device is structurally limited, namely the maximum rotation angle of the rotary output shaft relative to the guide rail is fixed on the structural layer of the device and cannot be changed only through the output torque of a prime mover, namely the rotation angle of the rotary output shaft is limited by the spiral track groove of the guide rail through the first bearing, the out-of-control condition cannot be generated, and the reliability is higher, so that the situation that the rotor rotates uncontrollably to cause injury of limbs of a person when a control system fails is prevented to a certain extent;
Compared with gear transmission, the contact area between the transmission parts is larger, namely the contact area between the bearing and the track groove is larger than that of the gear in matching, so that the noise is lower during working, and compared with the conventional speed reducer, the speed reducer can bear larger torque and has stronger and more stable performance under the condition of certain quality.

The invention has simple structure, and in the installation process, the matching relation of the existing gear set does not need to be considered, and the first bearing and the second bearing only need to be respectively corresponding to the corresponding track grooves; therefore, compared with the prior art, the invention has better modular design, and different transmission ratios can be obtained only by replacing the stator shells with different lead angles of the spiral guide track grooves.

The invention does not need a gear set, reduces the radial size of the reducing motor, and leads the reducing motor to be lighter than the traditional reducing motor in the use scene of the exoskeleton of the single driving motor.

The invention discloses a physical assistance device, wherein a speed reducing motor prepared by adopting a speed reducing motor module or a motor speed reducing method in the invention is used as a speed reducing device connected with a prime motor in the physical assistance device, so that stroke limitation can be effectively carried out on the prime motor, and the condition that the limbs of a person are injured due to uncontrolled rotation of a rotor when a control system fails is prevented to a certain extent.

The foregoing shows and describes the general principles, principal features, and advantages of the invention. It will be understood by those skilled in the art that the present invention is not limited to the embodiments described above, which are given by way of illustration of the principles of the present invention, but that various changes and modifications may be made without departing from the spirit and scope of the invention, and such changes and modifications are within the scope of the invention as claimed. The scope of the invention is defined by the appended claims and equivalents thereof.

## Claims

1. A speed-reducing electric motor module which **characterized in that**: comprises a driving end and a rotary output shaft (2);
the driving end comprises a screw rod (3) and a screw rod nut (4); one end of the screw rod (3) is provided with a power interface (30) which is matched with the screw rod (3) and can be connected with a prime mover (5) to drive the screw rod (3) to rotate;
when the screw rod (3) drives the screw rod nut (4) to move linearly, the screw rod nut (4) rotates around the screw rod (3) under the guidance of the guide rail (1);
and in the rotary motion process of the screw rod nut (4), the rotary output shaft (2) is driven to rotate.

2. The speed-reducing electric motor module according to claim 1, wherein: the guide rail (1) is tubular; the axis of the guide rail (1) is superposed with the axis of the screw rod (3);
the guide rail (1) guides the motion track of the feed screw nut (4) to be a cylindrical spiral line wound around the pipe wall of the guide rail (1).

3. The speed-reducing electric motor module according to claim 1, wherein: the guide rail (1) is tubular, and a spiral rail groove (10) penetrating through the pipe wall on one side of the guide rail (1) is formed in the pipe wall of the guide rail (1);
the track of the spiral track groove (10) is a cylindrical spiral line wound around the pipe wall of the guide rail (1);
a tubular hollow rotary output shaft (2) is arranged in the pipe wall of the guide rail (1);
a linear track groove (20) penetrating through the pipe wall on one side of the rotary output shaft (2) is formed in the pipe wall of the rotary output shaft (2); the notch track of the linear track groove (20) is parallel to the axial direction of the rotary output shaft (2);
and a screw rod (3) and a screw rod nut (4) which is arranged on the screw rod (3) and can reciprocate along the screw rod are arranged in the pipe wall of the rotary output shaft (2) along the axial direction of the rotary output shaft (2).

4. The speed-reducing electric motor module according to claim 3, wherein: the feed screw nut (4) comprises a nut body (40) moving along a feed screw and a first bearing (41) and a second bearing (42) arranged on the nut body;
the first bearing (41) passes through the linear track groove (20), contacts the spiral track groove (10), and can roll in the spiral track groove (10); the nut body (40) is driven to do linear motion and simultaneously do rotary motion along the track of the spiral track groove (10);
the second bearing (42) contacts the linear track groove (20) and can roll in the linear track groove (20); the nut body (40) drives the rotary output shaft (2) to do rotary motion in the process of moving along the linear track groove (20).

5. The speed-reducing electric motor module according to claim 4, wherein: the first bearing (41) comprises a first rotating shaft (410) fixed on the feed screw nut (4) and a first roller (411) arranged on the first rotating shaft (410);
the first rotating shaft (43) passes through the linear track groove (20) and reaches the spiral track groove (10); the first roller (411) moves only within the spiral track groove (10);
the second bearing (42) comprises a second rotating shaft (420) fixed on the feed screw nut (4) and a second roller (421) arranged on the second rotating shaft (420); the second roller 421 moves only in the linear rail groove 20.

6. The speed-reducing electric motor module according to claim 5, wherein: the diameter of the first roller (411) is smaller than the groove width of the spiral track groove (10) by 0.01-0.2 mm;
the diameter of the second roller (421) is smaller than the groove width of the linear track groove (20) by 0.01-0.2 mm.

7. The speed-reducing electric motor module according to claim 1, wherein: and a motor connecting section is arranged on one side of the guide rail (1).

8. A speed reducing method for electric motor is **characterized in that**: the rotary motion output by the rotor end of the motor is converted into linear motion, and then the linear motion is converted into rotary motion, so that the rotating speed is reduced, and the output torque is improved.

9. The speed-reducing electric motor module according to claim 8, wherein: the method comprises the following steps of conveying a rotating torque output by a rotor end of a motor to a screw rod to drive the screw rod to rotate; a screw rod nut arranged on the screw rod is driven to linearly move through a rotating screw rod;
when the screw rod drives the screw rod nut to do linear motion, the screw rod nut rotates around the screw rod under the guidance of the guide rail;
in the process of the rotary motion of the screw rod nut, the rotary output shaft is driven to do rotary motion;
the guide rail guides the motion track of the feed screw nut to be a cylindrical spiral line wound around the pipe wall of the guide rail.

10. A physical assistance device is **characterized in that**: the mechanical framework comprises a driving mechanism and a mechanical framework driven by the driving mechanism; the driving mechanism is decelerated through the deceleration motor module set of any one of claims 1 to 7 to output power to the mechanical framework.
